# EUROPÄISCHE PATENTSCHRIFT

(11) **EP 2 114 546 B1**
(45) Veröffentlichungstag und Bekanntmachung des Hinweises auf die Patenterteilung: **28.03.2012**
(21) Anmeldenummer: 08701004.7
(22) Anmeldetag: 08.01.2008
(51) Int. Cl.: B01D 29/54, B01D 35/147, B01D 35/06

(54) **FILTERELEMENT ZUR ABREINIGUNG VON FLUIDEN**
FILTER ELEMENT FOR CLEANING OF FLUIDS
ÉLÉMENT FILTRANT DESTINÉ À LA PURIFICATION DE LIQUIDES

(30) Priorität: 30.01.2007 DE 102007004491
(43) Veröffentlichungstag der Anmeldung: 11.11.2009
(73) Patentinhaber: RT-Filtertechnik Gmbh, 88048 Friedrichshafen (DE)
(72) Erfinder: MÜLLER, Günther, 88682 Salem (DE); STEHLE, Gerhard, 78467 Konstanz (DE)
(74) Vertreter: Bartels, Martin Erich Arthur
(86) Internationale Anmeldenummer: PCT/EP2008/000060
(87) Internationale Veröffentlichungsnummer: WO 2008/092543

(56) Entgegenhaltungen:
- EP-A- 0 441 367
- JP-A- 10 159 530
- US-A- 4 557 829
- US-A1- 2003 038 093

## Beschreibung

Die Erfindung betrifft ein Filterelement zur Abreinigung von Fluiden, mit einem einen Filterhohlraum umgebenden Mantelkörper mit Durchlässen für abgereinigtes Fluid, einer den Mantelkörper an einem Ende abschließenden Endkappe, einer den Mantelkörper am anderen Ende abschließenden Fassung mit mindestens einem Durchlass zum Einströmen des abzureinigenden Fluides in einen Einströmbereich innerhalb des Filterhohlraumes, mindestens einem sich zwischen Endkappe und Fassung erstreckenden Filtermedium, das vom Einströmbereich her von dem zu reinigenden Fluid zur Reinseite hin durchströmbar ist, und mit einer Bypassanordnung mit zumindest einem bei Erreichen eines Betätigungsdruckes öffnenden Ventil, das einen Austritt von Fluid aus dem Einströmbereich zur Reinseite hin ermöglicht.

Derartige Filterelemente, bei denen die Fassung eine Elementaufnahme bildet, über deren Durchlass das Fluid in den Einströmbereich des Filterhohlraumes eintritt, sind in verschiedenen Ausführungsformen allgemein bekannt, beispielsweise durch die US 2003/0038093 A1, und handelsüblich. Beim Filtrationsvorgang strömt das Fluid vom Einströmbereich her durch das Filtermedium hindurch und gelangt durch die Fluiddurchlässe des Mantelkörpers, der als äußerer Stützzylinder für das an seiner Innenseite anliegende Filtermedium dient, zur Außenseite des Filterelementes, die die Reinseite beim Filtrationsvorgang bildet.

Um die Gefahr von Betriebsstörungen oder Beschädigungen zu vermeiden, die sich beim Filtrationsvorgang ergeben können, wenn sich im Einströmbereich, also auf der Schmutzseite des Systems, eine übermäßige Druckdifferenz gegenüber dem auf der Reinseite herrschenden Druck einstellt, was beispielsweise in den Fällen eintritt, wo es im Zuge des Filtrationsvorganges zu einem Zusetzen des Filtermediums durch Anlagerung oder Einlagerung von Verunreinigungen kommt, ist es Stand der Technik, Bypassanordnungen so auszulegen, dass bei Überschreiten eines vorgewählten Überdruckes auf der Schmutzseite eine Druckentlastung über eines oder mehrere Ventile der Bypassanordnung erfolgt. Bei Ansprechen der Bypassanordnung ergeben sich jedoch insofern Probleme, als von der Schmutzseite her ungereinigtes Fluid zur Außenseite gelangt.

Aus der JP 10159530 geht ein Entlastungsventil für einen Ölfilter hervor, das einen Sieb aufweist, um das Eindringen von Fremdteilen in den Ölfilter zu unterbinden.

Die EP 0 441 367 A2 zeigt einen Ölfilter für Verbrennungsmotoren von Kraftfahrzeugen auf. Bei diesem Ölfilter ist in der Endkappe ein BypassVentil vorgesehen.

Im Hinblick hierauf stellt sich die Erfindung die Aufgabe, ein Filterelement zur Verfügung zu stellen, das sich bei einfacher und kompakter Bauweise durch ein demgegenüber verbessertes Betriebsverhalten bei Zuständen auszeichnet, in denen es zu einem Ansprechen der Bypassanordnung kommt.

Erfindungsgemäß ist diese Aufgabe durch ein Filterelement gelöst, das die Merkmale des Patentanspruches 1 in seiner Gesamtheit aufweist.

Dadurch, dass gemäß dem kennzeichnenden Teil des Anspruches 1 eine in die Endkappe des Filterelementes integrierte Siebeinrichtung vorhanden ist, die zumindest von dem von der Bypassanordnung kommenden, also ungereinigten, Fluid durchströmt werden muss, bevor dieses die Umgebung erreicht, ist die beim Stand der Technik gegebene Gefahr der Verunreinigung des Umgebungsbereiches des Filterelementes vermieden. Dadurch, dass die Siebeinrichtung zudem in die Endkappe des Filterelementes integriert ist, ergibt sich für das Gesamtsystem eine besonders kompakte und einfache Bauweise.

Die Siebeinrichtung ist durch in der Umfangswand der Endkappe zumindest bereichsweise vorgesehene Sieböffnungen gebildet. Damit steht eine größtmögliche Siebfläche zur Verfügung, ohne dass hierfür eine Vergrößerung der Gesamtabmessungen in Kauf genommen werden müsste.

Bei besonders vorteilhaften Ausführungsbeispielen ist der Mantelkörper kreiszylindrisch, und die Umfangswand ist auf einem Großteil ihrer Umfangsfläche kreiszylindrisch geformt und schließt sich in der Art eines koaxialen Fortsatzes an das Ende des Mantelkörpers an. Dadurch ergibt sich trotz des Vorhandenseins der Siebeinrichtung eine bei derartigen Filterelementen besonders vorteilhafte und weit verbreitete Bauweise einer kreiszylinderförmigen Filterpatrone.

Vorzugsweise ist die Anordnung hierbei so getroffen, dass zur Bildung der Sieböffnungen in der Umfangswand in Umfangsrichtung zueinander parallel verlaufende Schlitze und diese überbrückende, an der Innenseite der Umfangswand in Axialrichtung verlaufende Stege vorhanden sind, die zusammen mit den neben den Schlitzen verlaufenden Wandteilen ein Sieböffnungsmuster bilden. Für die Bildung der Siebeinrichtung ist somit kein gesondertes Bauteil erforderlich.

Bei besonders vorteilhaften Ausführungsbeispielen sind in gleichen Winkelabständen betreffende Stege, die jeweils ein Stegepaar bilden, radial nach einwärts verlaufend bis in die Nähe des Zentralbereiches verlängert, und die Stege jedes Stegepaares sind an ihrem inneren Ende über Teile eines Kreiszylinders bildende Endflächen verbunden. Dadurch bilden die verlängerten Stege mit ihren Wandflächen in radialen Ebenen verlaufende Trennwände, durch die der Innenraum der Endkappe in Abteile oder Kammern unterteilt ist, in denen Teile der Bypassanordnung positionierbar sind.

Vorzugsweise sind hierbei in den durch die verlängerten Stege gebildeten Wandflächen Aussparungen vorgesehen, die einen Fluiddurchtritt ermöglichen, sodass trotz der Kammerung des Innenraumes der Fluidzugang zur gesamten Siebfläche der Umfangswand ermöglicht ist.

Hierbei kann die Anordnung so getroffen sein, dass in den Zwischenräumen zwischen den Stegepaaren, also in den jeweils neben den Stegepaaren gelegenen Kammern, in Axialrichtung verlaufende Ventilführungen vorgesehen sind, an denen ein betreffender Ventilkörper eines Ventils der Bypassanordnung geführt ist.

Bei besonders vorteilhaften Ausführungsbeispielen ist der von der Umfangswand umgrenzte Innenraum der Endkappe durch einen an dieser befestigten, sich an das obere Ende des Filterhohlraumes anschließenden Ringkörper geschlossen, in dem Durchgangsöffnungen vorhanden sind, deren Öffnungsrand die Ventilsitze für die federbelasteten Ventilkörper der Ventile der Bypassanordnung bilden.

Der Ringkörper kann so gestaltet sein, dass er, vom Außenumfangsbereich ausgehend, einen äußeren, ersten, vertieften Ringraum aufweist, der eine Einfassung für das Ende des Mantelkörpers und für ein kreiszylinderförmiges, den Einströmbereich umgebendes Filtermedium bildet, dessen Außenseite an dem als Stützzylinder fungierenden Mantelkörper anliegt.

An den ersten Ringraum kann sich radial nach innen ein zweiter vertiefter Ringraum anschließen, der den oberen Abschluss des Einströmbereiches des Filterhohlraumes bildet und in dem die Durchgangsöffnungen mit den Ventilsitzen der Ventilkörper der Bypassventile vorgesehen sind.

Bei Ausführungsbeispielen, bei denen es sich um ein sogenanntes Kombi-Filterelement handelt, das zwei beim Filtrationsvorgang gleichzeitig durchströmte Filtermedien aufweist, kann die Anordnung so getroffen sein, dass der Ringkörper einen radial noch weiter innen liegenden, dritten vertieften Ringraum aufweist, der die Einfassung für einen inneren Stützzylinder und ein inneres zweites kreiszylinderförmiges Filtermedium bildet, dessen radial außen liegende Fläche an den Einströmbereich angrenzt und dessen radial innen liegende Fläche an den inneren Stützzylinder angrenzt.

Bei derartigen Ausführungsbeispielen, bei denen das durch das innere Filtermedium gereinigte Fluid in den Innenraum des innere Stützzylinders eintritt, kann der Ringkörper in seinem Zentrum eine den Innenraum des inneren Stützzylinders mit dem Innenraum der Endkappe verbindende, zentrale Öffnung aufweisen.

Nachstehend ist die Erfindung anhand eines in der Zeichnung dargestellten Ausführungsbeispieles im Einzelnen erläutert. Es zeigen:
- Fig. 1: einen mit abgewinkelter Schnittebene gezeichneten Längsschnitt eines Ausführungsbeispieles des erfindungsgemäßen Filterelementes;
- Fig. 2: eine gegenüber Fig. 1 vergrößert und auseinandergezogen dargestellte perspektivische Schrägansicht lediglich der Endkappe des Ausführungsbeispieles;
- Fig. 3: eine gegenüber Figuren 1 und 2 in kleinerem Maßstab dargestellte Ansicht der dem Filterhohlraum zugewandten Unterseite der Endkappe und
- Fig. 4: einen im Maßstab von Fig. 3 gezeichneten Querschnitt der Endkappe des Ausführungsbeispieles.

Nachstehend ist die Erfindung anhand eines Ausführungsbeispieles erläutert, bei dem es sich um ein sogenanntes Kombi-Filterelement handelt, bei dem das abzureinigende Fluid gleichzeitig zwei Filtermedien durchströmt, nämlich ein erstes, äußeres Filtermedium 1 und ein zweites, inneres Filtermedium 3, bei denen es sich beim vorliegenden Ausführungsbeispiel jeweils um einen kreiszylinderförmigen Faltenbalg handelt, d. h. einen beispielsweise aus einem papierartigen Werkstoff plissierten Körper, gegebenenfalls mit Verstärkungen oder Einfassungen. Es versteht sich, dass als Filtermedien 1 und 3 auch andersartige Strukturen, beispielsweise Filtermatten oder dergleichen vorgesehen sein könnten. Das außen liegende erste Filtermedium 1 erstreckt sich mit seiner Außenseite anliegend an einem einen Mantelkörper des Filterelementes bildenden äußeren Stützzylinder 5, der, wie das Filtermedium 1 kreiszylinderförmig und mit Fluiddurchlässen 7 vorgesehen ist, die in der Figur nicht sämtliche beziffert sind. Der Stützzylinder 5 ist an seinem in der Figur oben liegenden Ende mit einer Endkappe 9 abgeschlossen, die mit ihrem Endrand 11 den Außenrandbereich des Stützzylinders 5 übergreift. Außerdem bildet die Endkappe 9 innere Einfassungen 13, die die zugewandten Endbereiche der Filtermedien 1 und 3 übergreifen und diese so positionieren, dass sich die Filtermedien 1 und 3 koaxial und im Abstand voneinander in Längsrichtung des Filterelementes erstrecken.

An dem der Endkappe 9 entgegengesetzten Ende ist das Filterelement durch eine kreisrunde Fassung 15 abgeschlossen, die beim vorliegenden Ausführungsbeispiel aus Kunststoff in Form einer Scheibe gestaltet ist und endseits einen radial vorstehenden, umfänglichen Ring 17 mit einer umfänglichen Ringnut aufweist, in der ein Dichtring 19 sitzt, der das Filterelement in einem Gehäuse oder Tank abdichtet. Die Fassung 15 bildet in ihrem Bodenteil 21 Einfassungen 23 für die Endrandbereiche der Filtermedien 1 und 3, entsprechend den Einfassungen 13 am Deckelteil 9, wobei ein innerer, fluiddurchlässiger Stützzylinder 14, an dem die Innenseite des inneren Filterelementes 3 anliegt, ebenfalls in der betreffenden Einfassung 13, 23 mit aufgenommen ist.

In ihrem Kreiszentrum weist die Fassung 15 einen Vorsprung 25 in Form eines zylindrischen Zapfens auf, der ins Innere des Filterhohlraumes 27 vorspringt und die innere Begrenzung der Einfassung 23 bildet, so dass der innere Stützzylinder 14 mit seiner Innenseite am Vorsprung 25 anliegt. Für das Einströmen des zu reinigenden Fluides in den Einströmbereich 29, der sich zwischen äußerem Filtermedium 1 und inneren Filtermedium 3 befindet, weist die Fassung 15 als Durchlass für das zu reinigende Fluid einen ringförmigen Durchbruch 39 auf, der sich zur Zylinderachse konzentrisch über das Ende des den Einströmbereich 29 bildenden Ringraumes erstreckt. Die in Radialrichtung gemessene Breite des Durchbruches 39 entspricht der radialen Weite des den Einströmbereich 29 bildenden Ringraumes. Der Durchbruch 39 ist durch Verbindungsteile 32, die den Durchbruch in radia ler Richtung überbrücken und Unterbrechungen des Durchbruches 39 bilden, in Teilabschnitte unterteilt, wobei die Verbindungsteile 32 in gleichen Winkelabständen voneinander angeordnet sind und beim vorliegenden Ausführungsbeispiel sechs Verbindungsteile 32 vorhanden sind. Jedes Verbindungsteil 32 bildet einen Sitz für ein Sockelteil 31 einer Magnetkerze.

Wie bereits erwähnt, weisen an der Fassung 15 angeordnete Magnetkerzen 33 ein kreiszylindrisches Sockelteil 31 auf, das einen Magnetstab 37 trägt, der einen kleineren Durchmesser als das Sockelteil 31 besitzt. Beim vorliegenden Ausführungsbeispiel sind sechs Magnetkerzen 33 in gleichen Winkelabständen voneinander vorgesehen, wobei sich die Magnetkerzen 33 im Einströmbereich 29 jeweils mittig in Längsrichtung entlang der Innenseite des Filtermediums 1 und entlang der Außenseite des Filtermediums 3 in Richtung auf die Endkappe 9 erstrecken.

Als Sitz für die Sockelteile 31 der Magnetkerzen 33 befindet sich in den Verbindungsteilen 32 jeweils ein ins Innere vorspringender Rohrstutzen 41, der den eigentlichen Sitz bildet, an dem das Sockelteil 31 umfangsseitig anliegt. Die Abdichtung des Sockelteiles 31 gegenüber dem Stutzen 41 bildet einen Dichtring 43 in einer Ringnut des Sockelteiles 31. Im Stutzen 41 ist das jeweilige Sockelteil 31 lösbar gesichert, etwa durch Verklipsen, eine bajonettartige Sicherung oder eine Verschraubung, was nicht im Einzelnen dargestellt ist. Die lösbare Sicherung ermöglicht es, Magnetkerzen 33, beispielsweise für Wartungs- oder Diagnosezwecke, separat auszubauen.

Vorzugsweise sind Fassung 15 und Stützzylinder 5 und 14 aus einem Kunststoffwerkstoff hergestellt. Wenn die Magnetkerzen 33 beim Elementwechsel zusammen mit dem Filterelement aus dem betreffenden System entnommen werden, besteht keine Gefahr eines Austretens von Schmutzpartikeln, da sich die Magnetkerzen 33 im Inneren der Schmutzkammer (Einströmbereich 29) befinden. Bei separater Entnahme der Magnetkerzen 33 aus dem Durchbruch 39 in der Fassung 15 heraus, besteht ebenfalls keine Verschmutzungsgefahr, da anhaftender Schmutz nur in die Schmutzkammer des Filterelementes abfallen kann. Hierbei können in vorteilhafter Weise die Magnetkerzen 33 getrennt entsorgt werden.

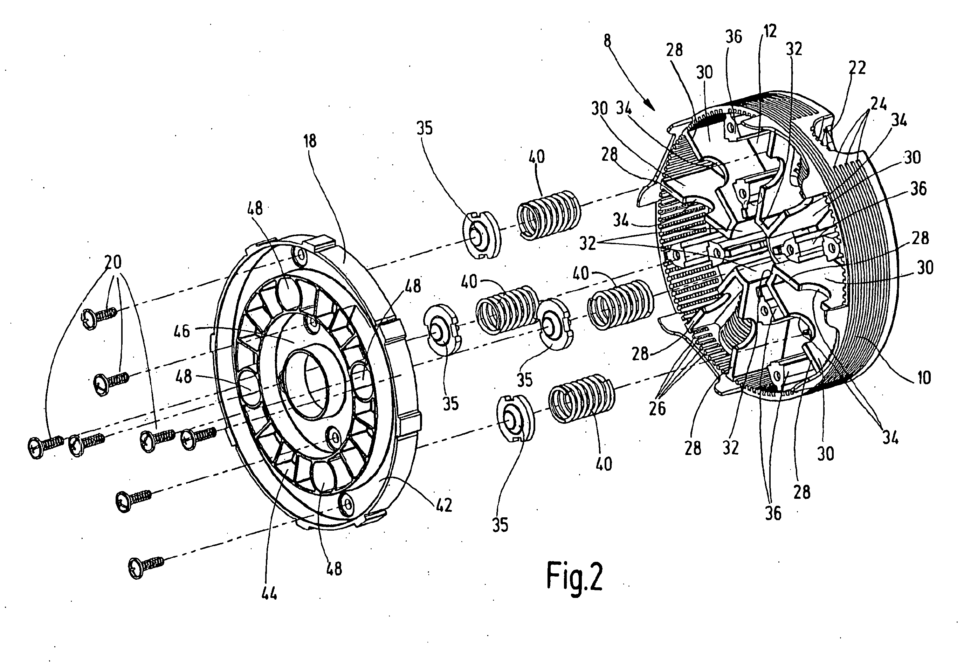

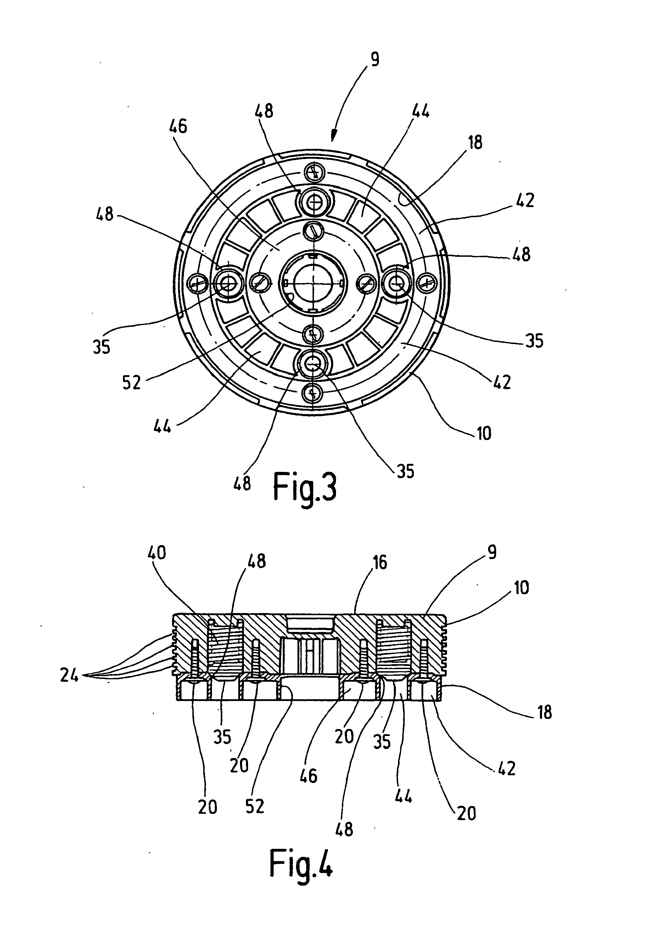

Nähere Einzelheiten des Aufbaues der Endkappe 9 sind den Figuren 2 bis 4 entnehmbar. Wie am deutlichsten aus Fig. 2 erkennbar ist, weist die Endkappe 9 als Hauptteil 8 einen aus Kunststoff einstückig geformten runden Körper auf, der eine einen hohlen Kreiszylinder bildende Umfangswand 10 aufweist, die einen Innenraum 12 umgibt, der auf der Deckelseite 16 (Fig. 4) geschlossen und an dem dem Filterhohlraum zugewandten Ende offen ist, siehe Fig. 2. Dieses offene Ende schließt ein durch Verschrauben mit dem Hauptteil 8 verbundener Ringkörper 18 ab, der ebenfalls aus Kunststoff einstückig geformt ist. Die die Verschraubung bildenden Schrauben 20 sind lediglich in Fig. 2 und 4 dargestellt. Die Umfangswand 10 ist, von Griffmulden 22 abgesehen, auf der gesamten Umfangslänge von durchgehenden Schlitzen 24 durchbrochen, die im Abstand parallel voneinander in Umfangsrichtung verlaufen und nicht sämtlich beziffert sind. An der Innenseite der Umfangswand 10 sind die zwischen den Schlitzen 24 verlaufenden Wandteile durch die Schlitze 24 überbrückende, in Axialrichtung verlaufende Stege 26 miteinander verbunden, die ebenfalls nicht sämtlich beziffert sind. Wie die Fig. 2 zeigt, in der der Innenraum 12 geöffnet dargestellt ist, sind von den Stegen 26 in regelmäßigen Winkelabständen betreffende Stege 28 radial nach innen verlängert, sodass die verlängerten Stege 28 beim gezeigten Ausführungsbeispiel vier Stegepaare bilden, die in Radialebenen verlaufende Wandflächen 30 bilden, deren Ende in der Nähe des Zentralbereiches durch Endflächen 32 verbunden sind, die Teile einer Kreiszylinderfläche bilden.

Die zu den Schlitzen 24 quer verlaufenden Stege 26 bilden zusammen mit den Schlitzen 24 ein Sieböffnungsmuster, sodass die Umfangswand 10 nahezu ganzflächig eine Siebfläche bildet. Auch im Bereich der Griffmulden 22 befindet sich ein Muster aus Sieböffnungen.

Aus den verlängerten Stegen 28 gebildete Stegepaare unterteilen den Innenraum 12 des Hauptteiles 8 der Endkappe 9 in Kammern, wobei Aussparungen 34 in den Wandflächen 30 einen Fluiddurchgang zwischen den Kammern bilden. In den zwischen den über Endflächen 32 verbundenen Stegepaaren befindlichen Kammern sind im Abstand voneinander in Axialrichtung verlaufende Führungszapfen 36 vorgesehen, die die Ventilführungen für tellerartige Ventilkörper 35 von Bypassventilen bilden, die durch Federn 40 in die Schließstellung vorgespannt sind. Die Enden der Führungszapfen 36 bilden zusammen mit den Schrauben 20 die Verschraubung des Ringkörpers 18 mit dem Hauptteil 8 der Endkappe 9.

Der Ringkörper 18 weist auf der dem Filterhohlraum zugewandten Seite konzentrische, vertiefte Ringräume auf, nämlich einen ersten äußeren Ringraum 42, einen sich daran radial weiter innen anschließenden zweiten Ringraum 44 und einen noch weiter innen liegenden Ringraum 46. Von diesen Ringräumen überliegt der zweite Ringraum 44 das obere Ende des Einströmbereiches 29. Um einen Druckabbau aus dem Einströmbereich 29 zu ermöglichen, befinden sich im Ringraum 44 für jedes Bypassventil eine Durchgangsöffnung 48, deren dem Innenraum 12 zugewandter Öffnungsrand den Ventilsitz für den betreffenden Ventilkörper 35 bildet.

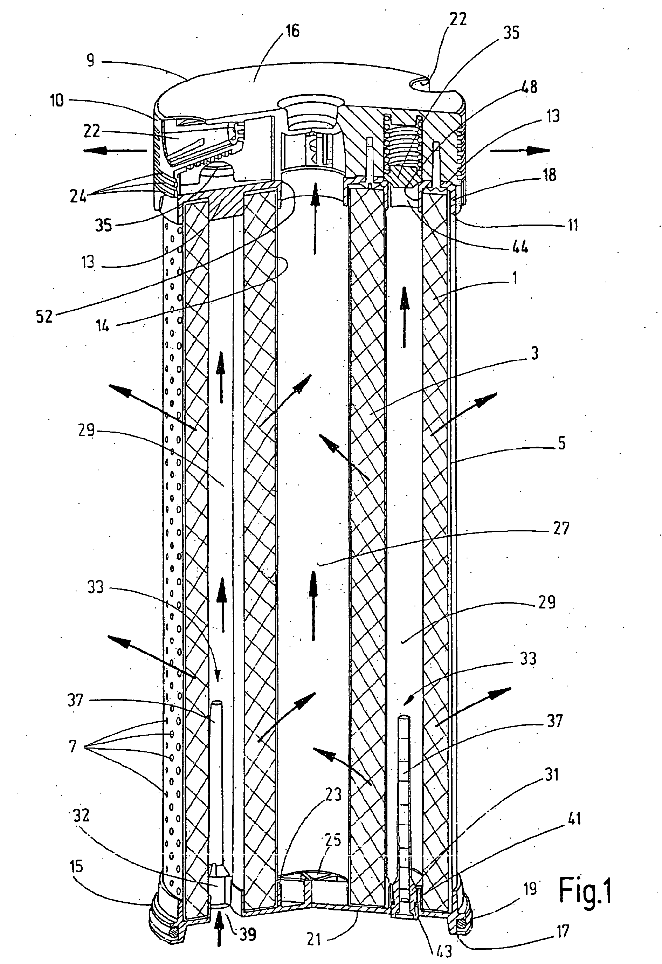

Die Ringräume 42 und 46 bilden Teil der in Fig. 1 mit 13 bezeichneten Einfassung für die oberen Enden vom äußeren Stützzylinder 5 mit daran anliegendem ersten Filtermedium 1 (Ringraum 42) bzw. für den inneren Stützzylinder 14 mit anliegendem innerem Filtermedium 3 (Ringraum 46). Im Zentralbereich weist der Ringkörper 18 eine zentrale Öffnung 52 auf, über die der Innenraum des inneren Stützzylinders 14 mit dem Innenraum 12 der Endkappe 9 verbunden ist.

Da bei der Erfindung praktisch die gesamte Fläche der Umfangswand 10 als Siebeinrichtung zur Verfügung steht, ergeben sich mehrere betriebliche Vorteile. Zum einen baut sich für das im normalen Filtrationsbetrieb aus dem Innenraum des inneren Stützzylinders 14 austretende Fluid kein ins Gewicht fallender, den Austritt behindernder Staudruck auf. Vielmehr wirkt die Siebeinrichtung als Diffusor, sodass der Fluidaustritt in beruhigter, homogener Strömung erfolgt. Dies ist von besonderem Vorteil bei Ansprechen der Bypassanordnung, wo der Fluidaustritt bei erhöhtem Druckniveau erfolgt. Gleichzeitig ermöglicht die zur Verfügung stehende große Siebfläche eine Siebfeinheit, sodass sie bei ansprechender Bypassanordnung als hochwirksames Bypass-Schutzsieb wirkt, sodass Verschmutzungen der Umgebung wirksam verhindert sind.

## Patentansprüche

1. Filterelement zur Abreinigung von Fluiden, mit einem einen Filterhohlraum umgebenden Mantelkörper (5) mit Durchlässen (7) für abgereinigtes Fluid, einer den Mantelkörper (5) am einen Ende abschließenden Endkappe (9), einer den Mantelkörper (5) am anderen Ende abschließenden Fassung (15) mit mindestens einem Durchlass (39) zum Einströmen des abzureinigenden Fluides in einen Einströmbereich (29) innerhalb des Filterhohlraumes, mindestens einem sich zwischen Endkappe (9) und Fassung (15) erstreckenden Filtermedium (1, 3), das vom Einströmbereich (29) her von dem zu reinigenden Fluid zur Reinseite hin durchströmbar ist, und mit einer Bypassanordnung mit zumindest einem bei Erreichen eines Betätigungsdruckes öffnenden Ventil (35, 36, 48), das einen Austritt von Fluid aus dem Einströmbereich (29) zur Reinseite hin ermöglicht, **dadurch gekennzeichnet, dass** in die Endkappe (9) eine Siebeinrichtung (24, 26, 28) integriert ist, durch die zumindest teilweise das von einem Filtermedium (3) abgereinigte Fluid und/oder das von der Bypassanordnung kommende Fluid hindurch strömt, wobei die Siebeinrichtung (24, 26, 28) durch in einer Umfangswand (10) der Endkappe (9) zumindest bereichsweise vorgesehene Sieböffnungen gebildet ist.

2. Filterelement nach Anspruch 1, **dadurch gekennzeichnet, dass** der Mantelkörper (5) kreiszylindrisch ist und die Endkappe (9) eine Umfangswand (10) aufweist, die auf einem Großteil ihrer Umfangsfläche kreiszylindrisch geformt ist und sich in der Art eines koaxialen Fortsatzes an das Ende des Mantelkörpers (5) anschließt.

3. Filterelement nach Anspruch 1 oder 2, **dadurch gekennzeichnet, dass** zur Bildung der Sieböffnungen in der Umfangswand (10) in Umfangsrichtung zueinander parallel verlaufende Schlitze (24) und diese überbrückende, an der Innenseite der Umfangswand (10) in Axialrichtung verlaufende Stege (26, 28) vorhanden sind, die zusammen mit den neben den Schlitzen (24) verlaufenden Wandteilen ein Sieböffnungsmuster bilden.

4. Filterelement nach Anspruch 3, **dadurch gekennzeichnet, dass** in gleichen Winkelabständen betreffende Stege (28), die jeweils ein Stegepaar bilden, radial nach einwärts verlaufend bis in die Nähe des Zentralbereiches verlängert sind und dass die Stege (28) jedes Stegepaares an ihrem inneren Ende über Teile eines Kreiszylinders bildende Endflächen (32) verbunden sind.

5. Filterelement nach Anspruch 4, **dadurch gekennzeichnet, dass** die radial verlängerten Stege (28) der Stegepaare Wandflächen (30) bilden, in denen Aussparungen (34) einen Fluiddurchtritt ermöglichen.

6. Filterelement nach Anspruch 5, **dadurch gekennzeichnet, dass** in den Zwischenräumen zwischen den Stegepaaren in Axialrichtung verlaufende Ventilführungen (36) vorgesehen sind, an denen ein betreffender Ventilkörper (35) eines Ventils (35, 36, 48) der Bypassanordnung geführt ist.

7. Filterelement nach Anspruch 6, **dadurch gekennzeichnet, dass** der von der Umfangswand (10) umgrenzte Innenraum (12) der Endkappe (9) durch einen an dieser befestigten, sich an das obere Ende des Filterhohlraumes anschließenden Ringkörper (18) geschlossen ist, in dem Durchgangsöffnungen (48) vorhanden sind, deren Öffnungsrand die Ventilsitze für die federbelasteten Ventilkörper (35) der Ventile (35, 36, 48) der Bypassanordnung bilden.

8. Filterelement nach Anspruch 7, **dadurch gekennzeichnet, dass** der Ringkörper (18), vom Außenumfangsbereich ausgehend, einen äußeren, ersten vertieften Ringraum (42) aufweist, der eine Einfassung für das Ende des Mantelkörpers (5) und für ein kreiszylinderförmiges, den Einströmbereich (29) umgebendes Filtermedium (1) bildet, dessen Außenseite an dem als Stützzylinder fungierenden Mantelkörper (5) anliegt.

9. Filterelement nach Anspruch 8, **dadurch gekennzeichnet, dass** sich an den ersten Ringraum (42) radial nach innen ein zweiter vertiefter Ringraum (44) anschließt, der den oberen Abschluss des Einströmbereiches (29) des Filterhohlraumes bildet und in dem die Durchgangsöffnungen (48) mit den Ventilsitzen der Ventilkörper (35) der Bypassventile vorgesehen sind.

10. Filterelement nach Anspruch 9, **dadurch gekennzeichnet, dass** ein radial noch weiter innen liegender dritter vertiefter Ringraum (46) die Einfassung für einen inneren Stützzylinder (14) und ein inneres, zweites, kreiszylinderförmiges Filtermedium (3) bildet, dessen radial außen liegende Fläche an den Einströmbereich (29) angrenzt und dessen radial innen liegende Fläche an den inneren Stützzylinder (14) angrenzt.

11. Filterelement nach Anspruch 10, **dadurch gekennzeichnet, dass** der Ringkörper (18) im Zentrum eine den Innenraum des inneren Stützzylinders (14) mit dem Innenraum (12) der Endkappe (9) verbindende, zentrale Öffnung (52) aufweist.

## Claims

1. A filter element for the cleaning of fluids, comprising a jacket body (5) surrounding a filter cavity with apertures (7) for cleaned fluid, an end cap (9) closing the jacket body (5) at one end, a holder (15) closing the jacket body (5) at the other end with at least one aperture (39) for the inflow of the fluid to be cleaned into an inflow region (29) within the filter cavity, at least one filter medium (1, 3) extending between the end cap (9) and the holder (15) through which the fluid to be cleaned can flow from the inflow region (29) to the clean side, and comprising a bypass arrangement comprising at least one valve (35, 36, 48) that opens upon reaching an actuation pressure and which enables fluid to pass out of the inflow region (29) to the clean side, **characterised in that** there is integrated into the end cap (9) a filtering device (24, 26, 28) through which at least partially the fluid cleaned by a filter medium (3) and/or the fluid coming from the bypass arrangement flows, the filtering device (24, 26, 28) being formed by filter openings provided at least in some regions in a peripheral wall (10) of the end cap (9).

2. The filter element according to Claim 1, **characterised in that** the jacket body (5) is in the form of a circular cylinder and the end cap (9) has a peripheral wall (10) which is in the form of a circular cylinder over a large part of its peripheral surface, and adjoins the end of the jacket body (5) in the manner of a coaxial extension.

3. The filter element according to Claim 1 or 2, **characterised in that** in order to form the filter openings in the peripheral wall (10) in the peripheral direction there are slots (24) running parallel to one another and bars (26, 28) bridging the latter and running on the inside of the peripheral wall (10) in the axial direction which form a filter opening pattern together with the wall parts running next to the slots (24).

4. The filter element according to Claim 3, **characterised in that** respective bars (28) the same angular distance away from one another, which respectively form a pair of bars, are elongated running radially inwards to close to the central region, and that the bars (28) of each pair of bars are connected at their inner end by end surfaces (32) forming parts of a circular cylinder.

5. The filter element according to Claim 4, **characterised in that** the radially elongated bars (28) of the pairs of bars form wall surfaces (30) in which notches (34) enable the passage of fluid.

6. The filter element according to Claim 5, **characterised in that** there are provided in the spaces between the pairs of bars valve guides (36) running in the axial direction on which a respective valve body (35) of a valve (35, 36, 48) of the bypass arrangement is guided.

7. The filter element according to Claim 6, **characterised in that** the interior (12) of the end cap (9) defined by the peripheral wall (10) is closed by an annular body (18) fastened to the latter and adjoining the upper end of the filter cavity, and in which there are passage openings (48) the opening edge of which forms the valve seats for the springloaded valve bodies (35) of the valves (35, 36, 48) of the bypass arrangement.

8. The filter element according to Claim 7, **characterised in that** the annular body (18), proceeding from the outer peripheral region, has an outer, first recessed annular space (42) which forms an edging for the end of the jacket body (5) and for a circular cylindrical filter medium (1) surrounding the inflow region (29) and the outer side of which rests against the jacket body (5) acting as a support cylinder.

9. The filter element according to Claim 8, **characterised in that** there is adjoining the first annular space (42) radially inwardly a second recessed annular space (44) which forms the upper end of the inflow region (29) of the filter cavity and in which the passage openings (48) with the valve seats of the valve bodies (35) of the bypass valves are provided.

10. The filter element according to Claim 9, **characterised in that** a third recessed annular space (46) lying further inwards radially forms the edging for an inner support cylinder (14) and an inner, second circular cylindrical filter medium (3), the radially outwardly lying surface of which is adjacent to the inflow region (29) and the radially inwardly lying surface of which is adjacent to the inner support cylinder (14).

11. The filter element according to Claim 10, **characterised in that** the annular body (18) has in the centre a central opening (52) connecting the interior of the inner support cylinder (14) to the interior (12) of the end cap (9).

## Revendications

1. Elément formant filtre pour la purification de fluides, comprenant une enveloppe (5), qui entoure une cavité de filtre et qui a des passages (7) pour du fluide purifié, une coiffe (9) d'extrémité fermant l'enveloppe (5) à une extrémité, une douille (15) fermant l'enveloppe (5) à l'autre extrémité et ayant au moins un passage (39) pour l'afflux du fluide à purifier dans une zone (29) d'afflux à l'intérieur de la cavité de filtre au moins un milieu (1, 3) filtrant, qui s'étend entre la coiffe (9) d'extrémité et la douille (15) de la zone (29) d'afflux au côté purifié et qui peut être traversé par le fluide a purifier et un agencement de dérivation ayant au moins une soupape (35, 36, 48) qui s'ouvre, lorsqu'une pression d'actionnement est atteinte et qui permet au fluide de sortir de la zone (19) d'afflux au côté purifié, **caractérisé en ce que**, dans la coiffe (9) d'extrémité, est intégré un dispositif (24, 26, 28) de tamisage, à travers lequel passe, au moins en partie, le fluide purifié par le milieu (3) filtrant et/ou le fluide venant de l'agencement de dérivation, le dispositif (24, 26, 28) de tamisage étant formé par des ouvertures de tamisage prévues, au moins par endroit, dans une paroi (10) périphérique de la coiffe (9) d'extrémité.

2. Elément formant filtre suivant la revendication 1, **caractérisé en ce que** l'enveloppe (5) est cylindrique de section circulaire et la coiffe (9) d'extrémité à une paroi (10) périphérique, qui est conformée de manière cylindrique de section circulaire sur une grande partie de sa surface périphérique et qui se raccorde à l'extrémité de l'enveloppe (5) à la manière d'un prolongement coaxial.

3. Elément formant filtre suivant la revendication 1 ou 2, **caractérisé en ce que**, pour la formation des ouvertures de tamisage, il y a dans la paroi (10) périphérique des fentes (24) s'étendant parallèlement entre elles dans la direction périphérique et des parties (26, 28) pleines les pontant et s'étendant dans la direction axiale du côté intérieure de la paroi (10) périphérique, parties pleines qui ensemble avec les parties de parois s'étendant à côté des fentes (24) forment un motif d'ouvertures de tamisage.

4. Elément formant filtre suivant la revendication 3, **caractérisé en ce que** des parties pleines (28), s'étendant à de mêmes intervalles angulaires et formant respectivement une paire de parties pleines, sont prolongées, en s'étendant radialement vers l'intérieur, jusqu'au voisinage de la partie centrale et **en ce que** les parties (28) pleines de chaque paire de parties pleines sont reliées par des surfaces (32) d'extrémité formant des parties d'un cylindre circulaire.

5. Elément formant filtre suivant la revendication 4, **caractérisé en ce que** les parties (28) pleines prolongées radialement des paires de parties pleines forment des surfaces (30) de paroi, dans lesquelles des évidements (34) rendent possible un passage de fluide.

6. Elément formant filtre suivant la revendication 5, **caractérisé en ce que**, dans les intervalles entre les paires de parties pleines, il est prévu des guidages (36) de soupape, qui s'étendent dans la direction axiale et sur lesquels un corps (35) concerné d'une soupape (35, 36, 38) de l'agencement de dérivation est guidé.

7. Elément formant filtre suivant la revendication 6, **caractérisé en ce que** l'intérieur (12), délimité par la paroi (10) périphérique, de la coiffe (9) d'extrémité est fermé par un corps (18) annulaire, qui est fixé à celle-ci et qui se raccorde à l'extrémité supérieure de la cavité de filtre et dans lequel il y a des ouvertures (48) de passage dont les bords forment les sièges de soupape pour les corps (35), sollicités par un ressort, des soupapes (35, 36, 48).

8. Elément formant filtre suivant la revendication 7, **caractérisé en ce que** le corps (18) annulaire a, en partant de la partie périphérique extérieure, un premier espace (42) annulaire extérieur en creux, qui forme une bordure pour l'extrémité de l'enveloppe (5) et pour un milieu (1) filtrant en forme de cylindre de section circulaire, qui entoure la zone (29) d'afflux et dont le côté extérieur s'applique à l'enveloppe (5) servant de cylindre d'appui.

9. Elément formant filtre suivant la revendication 8, **caractérisé en ce qu'**au premier espace (42) annulaire se raccorde radialement vers l'extérieur un deuxième espace (44) annulaire en creux, qui forme la fermeture supérieure de la zone (29) d'afflux de la cavité du filtre et dans lequel sont prévues les ouvertures (48) de passage avec les sièges de soupape des corps (35) de soupape.

10. Elément formant filtre suivant la revendication 9, **caractérisé en ce qu'**un troisième espace (46) annulaire en creux, se trouvant radialement encore plus vers l'intérieur, forme la bordure pour un cylindre (14) intérieur d'appui et pour un deuxième milieu (23) filtrant intérieur en forme de cylindre de section circulaire, dont la surface se trouvant radialement à l'extérieur est voisine de la zone (29) de flux et dont la surface se trouvant radialement vers l'intérieur est voisine du cylindre (14) intérieur d'appui.

11. Elément formant filtre suivant la revendication 10, **caractérisé en ce que** le corps (18) annulaire comporte au centre une ouverture (52) centrale, mettant l'intérieur du cylindre (14) intérieur d'appui en communication avec l'intérieur (12) de la coiffe (9) d'extrémité.
